# EUROPEAN PATENT APPLICATION

(11) **EP 3 139 300 A1**
(43) Date of publication of application: **08.03.2017**
(21) Application number: 15877485.1
(22) Date of filing: 30.01.2015
(51) Int. Cl.: G06F 21/60

(54) **SAFETY INFORMATION MANAGEMENT METHOD, DEVICE AND TERMINAL**

(30) Priority: 14.01.2015 CN 201510018404
(71) Applicant: Yulong Computer Telecommunication Scientific (Shenzhen) Co., Ltd., Shenzhen, Guangdong 518057 (CN)
(72) Inventor: FENG, Dongjie, Shenzhen Guangdong 518057 (CN)
(74) Representative: Johnson, Richard Alan
(86) International application number: PCT/CN2015/072000
(87) International publication number: WO 2016/112567

(57) **Abstract**

A safety information management method, a safety information management device, and a terminal are provided. The method includes: detecting whether a terminal satisfies a protection condition for safety information at current time (S101); if yes, protecting the safety information (S102). The method addresses a problem of the prior art that the safety information cannot be actively protected if a user forgets to activate a protection mechanism for the safety information. In this method, when the terminal is in a state in which the safety information can be successfully viewed, the terminal actively protects the safety information as long as the terminal satisfies the protection condition for the safety information, which provides further safety protection for the safety information in the terminal.

## Description

### CROSS REFERENCE TO RELATED APPLICATIONS

This application claims priority to Chinese Patent Application No. 201510018404.8, entitled "SAFETY INFORMATION NAMAGEMENT METHOD, DEVICE AND TERMINAL", filed on January 14, 2015, which is hereby incorporated in its entireties by reference.

### FIELD OF THE TECHNICAL

The present invention relates to electronic communication technology field, and particularly to a safety information management method, a safety information management device, and a terminal.

### BACKGROUND

With the development of terminal technology, users prefer to store important information in terminals. To protect privacy, it's necessary to protect the safety of important information in terminals. In the present technology, important information is encrypted, or stored in an encrypted storage module, or stored in a safety system via an active operation of a user. In this application, the important information that is set to be protected by safety protection strategy is referred to be safety information. When the user needs to use the safety information, the user can perform an operation to decrypt the safety information or open the corresponding storage area. However, a potential safety problem still exists. After the user finishes work by use of the terminal, the terminal is currently in a state in which the safety information can be used. When the user forgets to activate a protection mechanism for the safety information, if someone borrows the terminal from the user at this time, and the user forgets that the terminal is currently in a state in which the safety information can be used, then leakage of the user's safety information may happen. For example, in a dual-system terminal, the user generally saves the safety information in the safety system. When the user operates the terminal through the safety system, after operation, under the condition that the user lends the terminal to another user without switching the operating system from the safety system to a normal system, leakage of the safety information stored in the terminal may happen.

### SUMMARY

The present disclosure provides a safety information management method, a safety information management device, and a terminal, which solves a problem of the prior art that safety information cannot be actively protected under a condition that a user forgets to activate a protection mechanism for the safety information.

To solve the above problems, the present disclosure adopts following technical solutions.

A safety information management method comprises: detecting whether a terminal satisfies a protection condition for safety information at current time; and protecting the safety information when the terminal satisfies the protection condition for the safety information at current time.

Furthermore, the protection condition comprises a use state protection condition, and the use state protection condition comprises following: a duration that the terminal does not receive a user operation is greater than a threshold, the terminal is in a dormant state, a screen of the terminal is in an off state, or the terminal begins to process network service.

When the use state protection condition is that the duration that the terminal does not receive a user operation is greater than the threshold, the step of detecting whether the terminal satisfies the protection condition for the safety information at current time comprises: detecting whether the duration that the terminal does not receive a user operation is greater than the threshold.

When the use state protection condition is that the terminal is in the dormant state, the step of detecting whether the terminal satisfies the protection condition for the safety information at current time comprises: detecting whether the terminal is in the dormant state.

When the use state protection condition is that the screen of the terminal is in the off state, the step of detecting whether the terminal satisfies the protection condition for the safety information at current time comprises: detecting whether the screen of the terminal is in the off state.

When the use state protection condition is that the terminal begins to process the network service, the step of detecting whether the terminal satisfies the protection condition for the safety information at current time comprises: detecting whether the terminal begins to process the network service.

Furthermore, when the terminal is a multi-system terminal, and multiple systems of the terminal comprise a safety system, the step of detecting whether the terminal satisfies the protection condition for the safety information at current time comprises: detecting whether the terminal satisfies the use state protection condition for the safety information when the terminal displays an operation interface of the safety system.

Furthermore, protecting the safety information comprises: hiding the safety information, or scrambling the safety information, or encrypting the safety information.

Furthermore, when the safety information is in a protected state, the safety information management method further comprises: detecting whether the terminal satisfies a condition for removing protection, and removing the protection for the safety information when the terminal satisfies the condition for removing protection.

A safety information management device comprises: a detection module configured to detect whether a terminal satisfies a protection condition for safety information, and a management module configured to protect the safety information when the detection result of the detection module is yes.

Furthermore, the protection condition comprises a use state protection condition. The use state protection condition comprises following: a duration that the terminal does not receive a user operation is greater than a threshold, the terminal is in a dormant state, a screen of the terminal is in an off state, or the terminal begins to process network service. The detection module comprises a use state detection sub-module, and the use state detection sub-module is configured to perform following operations.

When the use state protection condition is that the duration that the terminal does not receive a user operation is greater than the threshold, the use state detection sub-module is configured to detect whether the duration that the terminal does not receive a user operation is greater than the threshold.

When the use state protection condition is that the terminal is in the dormant state, the use state detection sub-module is configured to detect whether the terminal is in the dormant state.

When the use state protection condition is that the screen of the terminal is in the off state, the use state detection sub-module is configured to detect whether the screen of the terminal is in the off state.

When the use state protection condition is that the terminal begins to process the network service, the use state detection sub-module is configured to detect whether the terminal begins to process the network service.

Furthermore, when the terminal is a multi-system terminal, and multiple systems of the terminal comprise a safety system, the use state detection sub-module is configured to detect whether the terminal satisfies the use state protection condition for the safety information when the terminal displays an operation interface of the safety system.

Furthermore, the management module being configured for protecting the safety information comprises: hiding the safety information, or scrambling the safety information, or encrypting the safety information.

Furthermore, when the safety information is in a protected state, the detection module is further configured to detect whether the terminal satisfies a condition for removing protection. When the detection result of the detection module is that the terminal satisfies the condition for removing protection, the management module removes the protection for the safety information.

A terminal which comprises any of the above safety information management devices is provided.

Beneficial effects are following:

The present disclosure provides a safety information management method, a safety information management device, and a terminal. By detecting current state of the terminal, whether the terminal satisfies the protection condition for the safety information is detected. If yes, the safety information is protected. In the present disclosure, when the terminal is in a state in which the safety information can be successfully viewed, the safety information is actively protected as long as the terminal satisfies the protection condition for the safety information, which provides further safety protection for the safety information in the terminal. In this way, even if the user forgets to activate a protection mechanism for the safety information in the terminal, the safety information can be still protected, which can prevent leakage of the safety information, and make users feel safe when storing the safety information in the terminal.

### BRIEF DESCRIPTION OF THE DRAWINGS

FIG. 1 is a flow chart of a safety information management method in accordance with a first embodiment of the present disclosure.
FIG. 2 is a flow chart of a safety information management method in accordance with a second embodiment of the present disclosure.
FIG. 3 is a schematic view of a safety information management device in accordance with a third embodiment of the present disclosure.

### DETAILED DESCRIPTION OF ILLUSTRATED EMBODIMENTS

The present disclosure will be further described in detail below in combination with detailed embodiments and the accompanying drawings.

### First embodiment:

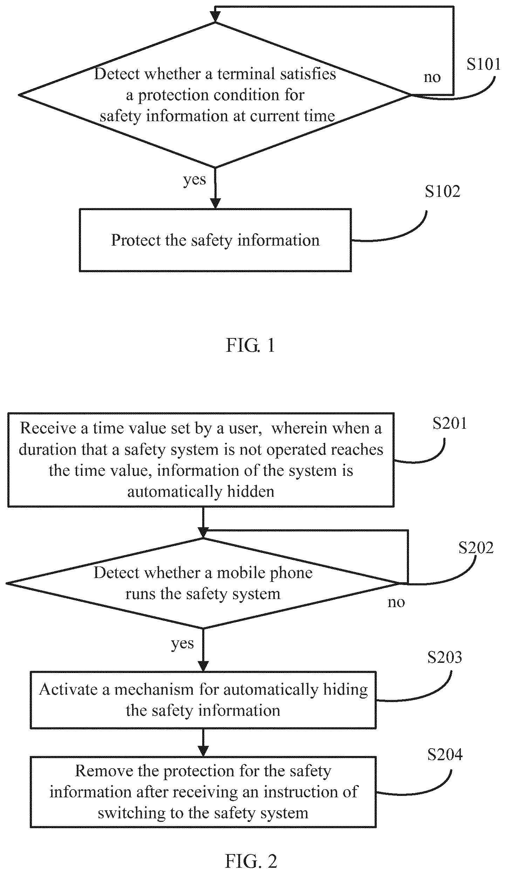

FIG. 1 is a flow chart of a safety information management method in accordance with a first embodiment of the present disclosure. As shown in FIG. 1, in this embodiment, the safety information management method provided by the present disclosure includes following.
S101: whether a terminal satisfies a protection condition for safety information at current time is detected. If yes, S102 is executed, and if not, S101 is further executed.
   The terminal referred in the present disclosure can be a mobile phone, a tablet computer, a computer, a handheld computer, or the like. The safety information is important information of a user that is stored in the terminal. Generally, for safe, the important information is encrypted or stored in a safe area of the terminal. The safety information may include: contact information, text messages, documents, communication records, and so on. The protection condition includes a use state protection condition. The use state protection condition specifically includes following: a duration that the terminal does not receive a user operations is greater than a threshold, the terminal is in a dormant state, a screen of the terminal is in an off state, or the terminal begins to process network service.
S102: the safety information is protected.
   S102 specifically includes: hiding the safety information, or scrambling the safety information, or performing a further encrypting process on the safety information directly. For example, in step S101 when it is determined that the duration that the terminal does not receive a user operation is greater than the threshold, the step of protecting the safety information is executed, preferably, the safety information is hidden. Or in step S101 when it is determined that the screen of the terminal is in the off state, the step of protecting the safety information is executed. In some embodiments, when the terminal is in a state in which the safety information is displayed, and in step S101 it is determined that the screen of the terminal is in the off state, the terminal automatically stops sending data of the safety information to the screen of the terminal, and then the screen enters the off state to protect the safety information.

In some embodiments, when the use state protection condition is that the duration that the terminal does not receive a user operation is greater than the threshold, step S101 includes detecting whether the duration that the terminal does not receive a user operation is greater than the threshold. Preferably, whether an operation command is received is firstly detected, and then whether the duration that the terminal does not receive an operation command is greater than the threshold is determined. In some embodiments, detecting whether the duration that the terminal does not receive a user operation is greater than the threshold includes detecting whether the safety information of the terminal can be freely operated. If yes, whether the terminal receives an operation command is detected periodically, and whether the duration that the terminal does not receive a user operation is greater than the threshold is detected. For example, the threshold is set to be 1 minute, and whether the duration that the terminal does not receive an operation command is greater than 1 minute is detected. By doing so, by way of detecting whether the user does not operate the terminal within a specified time period, a condition that the user may forget that the terminal is currently in a state in which leakage of the safety information is easy to happen can be obtained. Therefore, in order to ensure the safety of the safety information, the terminal can be reminded to protect the safety information.

When the use state protection condition is that the terminal is in the dormant state, step S101 incudes detecting whether the terminal is in the dormant state. The terminal entering the dormant state includes following: the terminal enters the dormant state via a user's active operation, or the terminal includes a dormant time, and when the dormant time arrives, the terminal enters the dormant state. Whether the safety information needs to be protected is determined by detecting whether the terminal is in the dormant state, it is because that before the terminal enters the dormant state, the safety information can be freely operated, and when another user starts the terminal which is in the dormant state, leakage of the safety information may happen. Therefore, to prevent leakage of the safety information, whether the safety information needs to be protected is determined by detecting whether the terminal is in the dormant state.

When the use state protection condition is that the screen of the terminal is in the off state, step S101 includes detecting whether the screen of the terminal is in the off state. The screen of the terminal entering the off state includes following: the user actively causes the screen of the terminal to enter the off state, or the screen of the terminal automatically enters the off state when the time for setting the screen of the terminal to enter the off state arrives. When the screen of the terminal enters the off state, it means that at current time the user does not need to use the terminal. However, before the screen of the terminal enters the off state, the safety information in the terminal may be operable, and when another user uses the terminal, leakage of the safety information may happen. Therefore, it is necessary to determine whether the safety information needs to be protected by detecting whether the screen of the terminal is in the off state. In addition, when the user is busy, and the user knows that the safety information in the terminal can be freely operated, the user can actively turn off the screen to protect the safety information, which facilitates user's operation.

When the use state protection condition is that the terminal begins to process the network service, detecting whether the terminal satisfies the protection condition for the safety information includes detecting whether the terminal begins to process the network service. When the user uses the terminal to deal with the network service, the terminal can be easily connected to an external network, which may cause the terminal to have viruses or Trojans, and all the information in the terminal may be viewed. Furthermore, when the terminal begins to process the network business, the terminal is easy to be intruded by Hacker, which may cause the information in the terminal to be stolen. Therefore, for the importance of the safety information, it is necessary to determine whether the safety information needs to be protected by detecting whether the terminal begins to process the network service.

In some embodiments, when the terminal is a multi-system terminal, and multiple systems of the terminal include a safety system, in step S101 detecting whether the terminal satisfies the protection condition for the safety information includes detecting whether the terminal satisfies the use state protection condition for the safety information when the terminal displays an operation interface of the safety system. For example, if the terminal is a dual system terminal, the dual systems include the safety system and a normal system. When the dual system terminal displays the operation interface of the safety system, it is necessary to detect whether the dual system terminal satisfies the use state protection condition for the safety information. That is, in this embodiment, when it is determined that the multi-system terminal runs the safety system, step S101 is executed.

In this embodiment, the protection condition further includes a work scene protection condition. Before detecting whether the terminal satisfies the use state protection condition at current time, whether the terminal satisfies the work scene protection condition is detected. If yes, whether the terminal satisfies the use state protection condition is detected. The work scene includes following: the terminal opens a safety storage area, or runs a safety system, or is in an unsafe geographical location, or the like. Specifically, whether the terminal is in the work scene that the terminal opens the safety storage area at current time is detected, or whether the terminal is in the work scene that the terminal opens the safety system at current time is detected, or whether the terminal is in a non-family location at current time is detected. If yes, it is determined that the safety information needs to be protected, and the step of detecting whether the terminal satisfies the use state protection condition at current time is executed. In this embodiment, before determining whether the safety information needs to be protected, the work scene of the terminal is further detected to determine whether the safety information is in a dangerous work scene, and then whether the terminal satisfies the use sate protection condition at current time is detected. Therefore, it is unnecessary to protect the safety information when the safety information is in the work scene where leakage of the safety information cannot happen, which saves usage of operation resources of the system of the terminal.

When the safety information is in a protected state, whether the terminal satisfies a condition for removing protection is detected. If yes, the protection for the safety information is removed. The condition for removing protection includes following: the terminal is switched to the safety system, or the terminal receives a legal operation instruction of opening the safety information. When the condition for removing protection is that the terminal is switched to the safety system, the step of detecting whether the terminal satisfies the condition for removing protection includes detecting whether the terminal is switched to the safety system. Or when the condition for removing protection is that the terminal receives the legal operation instruction of opening the safety information, the step of detecting whether the terminal satisfies the condition for removing protection includes detecting whether the terminal receives the legal operation instruction of opening the safety information. By doing so, the user can successfully view the safety information in the terminal when the user wants to view the safety information, and even if the safety information is protected, there is no need to perform complex operations to use the safety information. For example, the safety information is stored in the safety system, and when the user does not operate the terminal for a long time, the safety information is protected, and when the user wants to reopen the safety information, what is needed to do is to log on to the safety system again.

### Second embodiment::

For example, the safety information management method of the present disclosure will be further described below with reference to specific embodiments of practical applications. The terminal is a dual system mobile phone, the safety information is information stored in the safety system, and protecting the safety information is hiding the safety information. FIG. 2 is a flow chart of a safety information management method in accordance with a second embodiment of the present disclosure, and as shown in FIG. 2, in this embodiment, the safety information management method provided by the present disclosure includes following.
S201: a time value that is set by a user is received, wherein when a duration that the safety system is not operated reaches the time value, information of the system is automatically hidden. The time value can be set to be 1 minute, 3 minutes, 5 minutes, 10 minutes, 30 minutes, or the information of the system can be set to be never hidden. For example, the user sets that when the duration that the mobile phone does not receive any operation when the safety system is run reaches 1 minute, the mobile phone automatically hides the information of the safety system.
S202: whether the mobile phone runs the safety system is detected. If yes, S203 is executed, and if not, S202 is further executed.
S203: a mechanism for automatically hiding the safety information is activated. When the mechanism is activated, the mobile phone will begin to perform self-check according to the user's setting in S201. For example, when the user sets that when the duration that the mobile phone does not receive any operation when the safety system is run reaches 1 minute, the mobile phone automatically hides the information of the safety system, the system of the mobile phone will use its timer and an interrupt will be generated every a time period. It is assumed that the time period is 1 minute, that is, the time for hiding the information of the safety system is set to be 1 minute. The timer of the system generates an interrupt every 1 minute, and whether the user is operating the safety system during the interruption is scanned. If it is determined that the user does not operate the safety system, the current time is recorded, and if it is determined that the user is operating the safety system of the mobile phone, there is no need to record the current time. When a subsequent interrupt arrives, the system is scanned again. If the user still does not perform any operation, the current time is recorded, and the current time minus the last recorded time is a time length that the user does not operate the safety system. If it is determined that the user is using the mobile phone during the second scanning, all the time recorded during the first scanning will be cleared. Similarly, if it is determined that the user operates the safety system of the mobile phone within the time for hiding the information of the safety system, all the recorded time will be cleared. If the system determines that the time length that the user does not operate the safety system is greater than the time for hiding the information of the safety system, the information of the safety system will be protected, that is, the information of the safety system will not be shown. For example, contacts, call records, text messages, and other information will be hidden, such that the information of the safety system can be hidden automatically.
S204: the protection for the safety information is removed after receiving an instruction of switching to the safety system. At this point, if the user wants to view the information of the safety system again, the user needs to switch the operating system to an unsafe system, and then switch the operating system from the unsafe system to the safety system. After switching from the unsafe system to the safety system, a display module will be again invoked to display notification information.

The safety information management method of the present embodiment determines whether the safety information needs to be protected by detecting whether the terminal satisfies the protection condition for the safety information, which provides further protection for the safety information to avoid leakage of the safety information, and makes users feel safe when storing information in the terminal.

### Third embodiment:

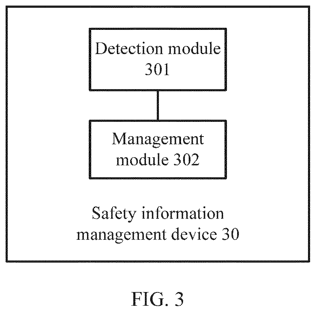

FIG. 3 is a schematic view of a safety information management device in accordance with a third embodiment of the present disclosure, and as shown in FIG. 3, in this embodiment, the safety information management device 30 of the present disclosure includes a detection module 301 and a management module 302. The detection module 301 is configured to detect whether the terminal satisfies a protection condition for safety information. The management module 302 is configured to protect the safety information when the detection result of the detection module 301 is yes. The safety information is important information of a user that is stored in the terminal. Generally, for safe, the important information is encrypted or stored in a safe area of the terminal. The safety information includes contact information, text messages, documents, communication records, and so on. The management module 302 is specifically configured to hide the safety information, or scramble the safety information, or perform a further encrypting process on the safety information directly. The safety information management device 30 may be a mobile phone, a tablet computer, or the like, and can also be installed in a corresponding terminal in the form of software. In this embodiment, by setting the protection condition for the safety information, the safety information is further protected, and leakage of the safety information may not easily happen.

In some embodiments, the protection condition includes a use state protection condition which specifically includes following: a duration that the terminal does not receive a user operation is greater than a threshold, the terminal is in a dormant state, a screen of the terminal is in an off state, or the terminal begins to process network service. The detection module 301 includes a use state detection sub-module, and the use state detection sub-module is specifically configured to detect whether the duration that the terminal does not receive a user operation is greater than the threshold when the use state protection condition is that the duration that the terminal does not receive a user operation is greater than the threshold, detect whether the terminal is in the dormant state when the use state protection condition is that the terminal is in the dormant state, detect whether the screen of the terminal is in the off state when the use state protection condition is that the screen of the terminal is in the off state, and detect whether the terminal begins to process the network service when the use state protection condition is that the terminal begins to process the network service. If the terminal does not receive the operation command for a long time, or the terminal is in the dormant state, or the screen of the terminal is in the off state, or the terminal begins to process the network service, the terminal may face the risk of leakage of the safety information. Therefore, in the embodiment, whether the terminal needs to protect the safety information is determined by detecting each of the four status of the terminal, which eliminates the risk of leakage of the safety information from different aspects, and protects user's rights.

In some embodiment, when the terminal is a multi-system terminal, and multiple systems of the terminal include a safety system, the detection module 301 is further configured to detect whether the terminal satisfies the use state protection condition of the safety information when the terminal displays an operation interface of the safety system. Specifically, the protection condition further includes a work scene protection condition. The detection module 301 further includes a work scene detection sub-module configured to detect the work scene of the terminal, and determine whether the safety information needs to be protected according to the work scene. When the detection result of the work scene detection sub-module is yes, the use state detection sub-module is further configured to detect whether the terminal satisfies the use state protection condition at current time. The work scene includes following: the terminal opens a safety storage area, or runs the safety system, or is in an unsafe geographical location, or the like. Specifically, whether the terminal is in the work scene that the terminal opens the safety storage area at current time is detected, or whether the terminal is in the work scene that the terminal runs the safety system at current time is detected, or whether the terminal is in a non-family location at current time is detected. If yes, it is determined that the safety information needs to be protected, and the step of detecting whether the terminal satisfies the use state protection condition at current time is executed. In this embodiment, before determining whether the safety information needs to be protected, the work scene of the terminal is further detected to determine whether the safety information is in a dangerous work scene, and then whether the terminal satisfies the use state protection condition at current time is detected. Therefore, it is unnecessary to protect the safety information when the safety information is in the work scene in which leakage of the safety information cannot happen, which saves usage of operating resources of the system of the terminal.

In some embodiments, the detection module 301 is further configured to detect whether the terminal satisfies a condition for removing protection when the safety information is in a protected state. The management module 302 is further configured to remove protection for the safety information when the detection result of the detection module 301 is that the terminal satisfies the condition for removing protection. The condition for removing protection includes following: the terminal is switched to the safety system, or the terminal receives a legal operation instruction of opening the safety information. The detection module 301 also includes a system detection sub-module configured to detect whether the terminal is switched to the safety system again and an instruction detection sub-module configured to detect whether the terminal receives a legal operation instruction of opening the safety information.

The safety information management device of the present embodiment determines whether the safety information needs to be protected by detecting whether the terminal satisfies the protection condition for the safety information, which provides an automatic protection method for the safety information when a user forgets to perform an operation to protect the safety information during using the terminal, and facilitates the user to use the safety information.

The present disclosure further provides a terminal, and the terminal includes a safety information management device described in any of the above embodiments. The terminal can be a mobile phone, a tablet computer, a computer, a handheld computer, or the like. The safety information management device is installed in the terminal, thus when a user uses the terminal, the safety of the safety information stored in the terminal can be ensured, and leakage of the safety information may not easily happen. Preferably, the terminal is a dual system terminal, and the dual systems include the safety system and a normal system. The safety information is usually stored in the safety system, and the safety information stored in the safety system is further protected by the safety information management device, which prevents leakage of the safety information.

In summary, by means of the embodiments of the present disclosure, at least following beneficial effects can be obtained.

Whether the terminal satisfies the protection condition for the safety information is determined by detecting the current state of the terminal. If yes, the safety information is protected. In this way, even if the user forgets to activate a protection mechanism for the safety information in the terminal, the safety information can be still protected, which prevents leakage of the safety information, and makes the user feel safe when storing the safety information in the terminal.

Furthermore, the protection condition is provided, and protecting the safety information can be easily realized.

Furthermore, when the terminal is a multi-system terminal, protecting the safety information of the safety system in the terminal can be realized, which provides further protection for the safety information of the terminal, and enhances the safety of the safety information.

Furthermore, the condition for removing protection is provided, and when the user of the terminal uses the terminal, the user can use the safety information without complicated operations, thus not only the privacy is protected, but also user's operation is facilitated.

The above is a further detail description of the present disclosure in the conjunction with specific embodiments, and it does not mean that the specific embodiments of the present invention are limited to these descriptions. Those skilled in the art can make a number of simple deductions or substitutions without departing from the concept of the present disclosure, and all the deductions or substitutions should be considered to fall within the scope of the present disclosure.

## Claims

1. A safety information management method, comprising:
detecting whether a terminal satisfies a protection condition for safety information at current time; and
protecting the safety information when the terminal satisfies the protection condition for the safety information at current time.

2. The management method of claim 1, **characterized in that** the protection condition comprises a use state protection condition, and the use state protection condition comprises following: a duration that the terminal does not receive a user operation is greater than a threshold, the terminal is in a dormant state, a screen of the terminal is in an off state, or the terminal begins to process network service;
when the use state protection condition is that the duration that the terminal does not receive a user operation is greater than the threshold, the step of detecting whether the terminal satisfies the protection condition for the safety information at current time comprises detecting whether the duration that the terminal does not receive a user operation is greater than the threshold; or
when the use state protection condition is that the terminal is in the dormant state, the step of detecting whether the terminal satisfies the protection condition for the safety information at current time comprises detecting whether the terminal is in the dormant state; or
when the use state protection condition is that the screen of the terminal is in the off state, the step of detecting whether the terminal satisfies the protection condition for the safety information at current time comprises detecting whether the screen of the terminal is in the off state; or
when the use state protection condition is that the terminal begins to process the network service, the step of detecting whether the terminal satisfies the protection condition for the safety information at current time comprises detecting whether the terminal begins to process the network service.

3. The management method of claim 2, **characterized in that** the terminal is a multi-system terminal, and multiple systems of the terminal comprise a safety system, detecting whether the terminal satisfies the protection condition for the safety information at current time comprises detecting whether the terminal satisfies the use state protection condition for the safety information when the terminal displays an operation interface of the safety system.

4. The management method of any of claims 1-3, **characterized in that** protecting the safety information comprises hiding the safety information, or scrambling the safety information, or encrypting the safety information.

5. The management method of any of claims 1-3, **characterized in that** when the safety information is in a protected state, the management method further comprises detecting whether the terminal satisfies a condition for removing protection, and removing the protection of the safety information when the terminal satisfies the condition for removing protection.

6. A safety information management device, comprising:
a detection module configured to detect whether a terminal satisfies a protection condition for safety information; and
a management module configured to protect the safety information when a detection result of the detection module is yes.

7. The management device of claim 6, **characterized in that** the protection condition comprises a use state protection condition, the use state protection condition comprises following: a duration that the terminal does not receive a user operation is greater than a threshold, the terminal is in a dormant state, a screen of the terminal is in an off state, or the terminal begins to process network service. the detection module comprises a use state detection sub-module, and the use state detection sub-module is configured to:
detect whether the duration that the terminal does not receive a user operation is greater than the threshold when the use state protection condition is that the duration that the terminal does not receive a user operation is greater than the threshold;
detect whether the terminal is in the dormant state when the use state protection condition is that the terminal is in the dormant state;
detect whether the screen of the terminal is in the off state when the use state protection condition is that the screen of the terminal is in the off state;
detect whether the terminal begins to process the network service when the use state protection condition is that the terminal begins to process the network service.

8. The management device of claim 7, **characterized in that** when the terminal is a multi-system terminal, and multiple systems of the terminal comprise a safety system, the use state detection sub-module is configured to detect whether the terminal satisfies the use state protection condition for the safety information when the terminal displays an operation interface of the safety system.

9. The management device of any of claims 6-8, **characterized in that** the management module being configured to protect the safety information comprises hiding the safety information, or scrambling the safety information, or encrypting the safety information.

10. The management device of any of claims 6-8, **characterized in that** when the safety information is in a protected state, the detection module is further configured to detect whether the terminal satisfies a condition for removing protection; when the detection result of the detection module is that the terminal satisfies the condition for removing protection, the management module is further configured to remove the protection of the safety information.

11. A terminal comprising a safety information management device of any of claims 6-8.
